# EUROPEAN PATENT SPECIFICATION

(11) **EP 2 181 838 B1**
(45) Date of publication and mention of the grant of the patent: **01.02.2012**
(21) Application number: 09171558.1
(22) Date of filing: 29.09.2009
(51) Int. Cl.: B29D 30/06, B29C 43/36

(54) **A bladder and an apparatus for shaping and curing a tire**
Blase und Vorrichtung zum Formen und Härten eines Reifens
Vessie et appareil de formation et de durcissement d'un pneu

(30) Priority: 13.10.2008 US 250006
(43) Date of publication of application: 05.05.2010
(73) Proprietor: The Goodyear Tire & Rubber Company, Akron, OH 44316-0001 (US)
(72) Inventor: Maus, Peter Cornelius, 4760 Bullingen (BE); Licht, Laurent, 57330 Zoufftgen (FR); Ozel, Fahri, 8480 Eischen (LU)
(74) Representative: Kutsch, Bernd

(56) References cited:
- EP-A1- 1 629 962
- GB-A- 561 068
- US-A- 4 776 781
- US-A- 5 403 174
- US-A1- 2008 084 007

## Description

### FIELD OF THE INVENTION

The present invention is directed to a tire bladder and to an apparatus for curing a tire.

### BACKGROUND OF THE INVENTION

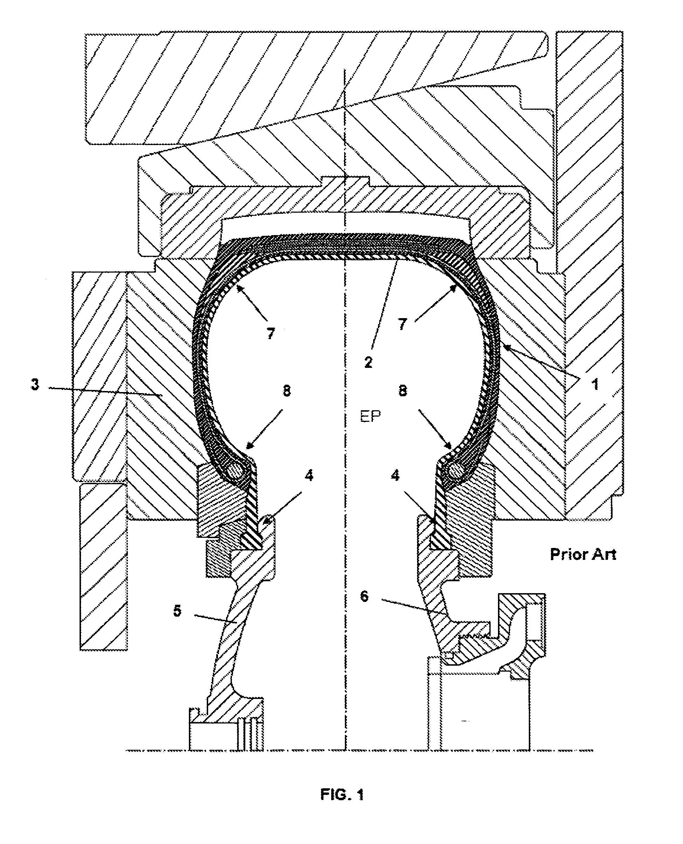

In the manufacture of tire, the shaping of uncured tire carcasses also called green-tires by means of a machine comprising a mold and a bladder is generally known and an example is illustrated in Figure 1. It shows a mold 3 composed of different movable elements for shaping and forming an uncured tire 1. To that end there is provided a bladder 2 shaped as an endless ribbon of elastomeric material, the two lateral edges 4 thereof being fastened to two circumferential flanges 5 and 6, respectively. The bladder 2 and the tire 1 are positioned such that the circumferential elastomeric ribbon is inside the toroid shape of the tire 1 and is facing the cavity of the tire. Upon inflation, the bladder 2 expands circumferentially into the tire cavity. The bladder contacts the whole inner surface of the tire and the internal pressure of the bladder exerts a pressure on the whole inner surface of the tire against the mold 3. The external surface of the tire is then pressed against the different elements of the mold for forming the sidewalls inscriptions and the tire tread. The tire 1 conforms thereby also to its final general shape. The mold and some other elements of the machine are heated up to a predetermined temperature in order to vulcanize the tire so that its rubber reaches a higher stiffness. Such a procedure, machine and bladder are known for example from US-A- 2006/0260735.

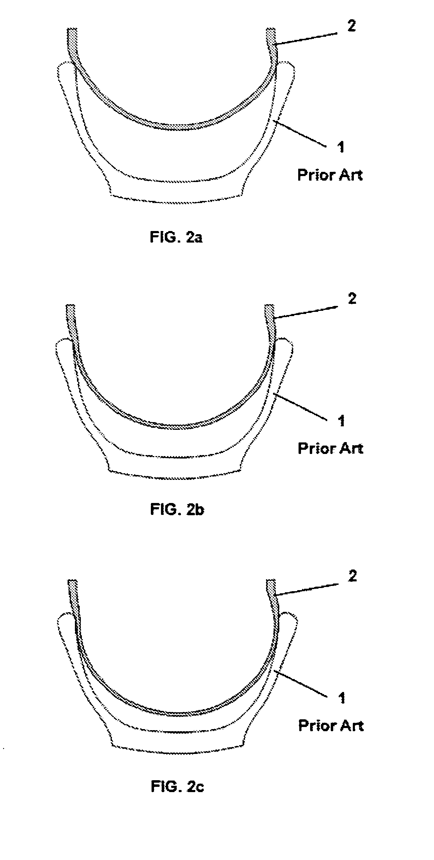

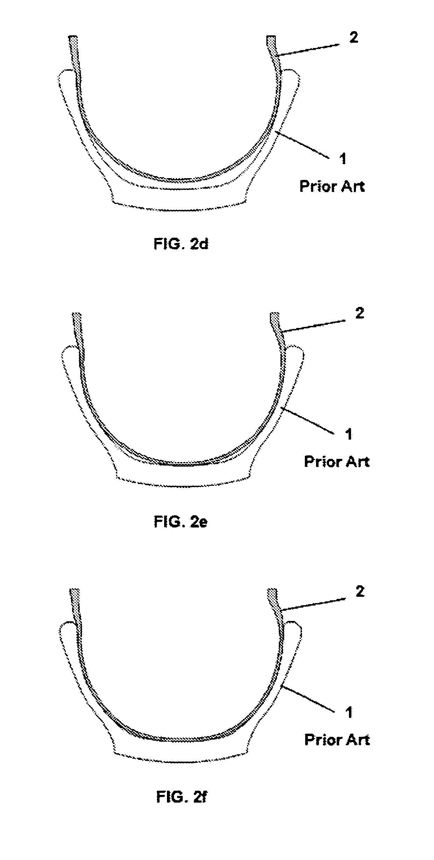

Uncured tire carcasses or green tires present a very low stiffness. The process of the bladder expanding in the tire cavity can cause relative movement between the outer contacting surface of the bladder and the inner surface of the uncured tire. This can lead to deformation and undesirable rubber flow of the tire. Indeed, the Figures 2a to 2f show cross sectional views of the bladder expansion and the molding procedure at different successive steps. Figures 2a to 2d show the progressive expansion of the bladder before it contacts the central section of the inner surface of the tire. In Figure 2d, the bladder is already expanded a lot but still contacts only the bead regions 8 of the inner surface of the tire. This has for consequence that the high tensions in the bladder membrane resulting from its stretching are transmitted to the bead regions 8 of the sidewalls. These tensions can cause rubber flow or deformation of the green tire. In Figure 2f the bladder finally contacts the shoulder regions 7 and the central region 9 of the tire. At this stage, the tension in the membrane is further increased resulting in an increased risk of deformations in the sidewalls or bead areas.

Attempts to overcome these problems for low aspect tires have resulted in an increased thickness of the bladder membrane in the shoulder and lateral portions as disclosed in US-A- 7,144,236 B2. This solution nevertheless did not prove to be adapted to tires with a higher aspect ratio like radial medium truck tires.

US-A- 3,963,394 discloses a bladder with a series of convolutions or expansion hollows extending circumferentially along the endless ribbon of the bladder and with reinforcing material in the center and the end sections of the bladder. These convolutions provide controlled amounts of extensibility to the bladder. The shape provided by these convolutions and the reinforcement does however not reduce the deformation and undesired rubber flow in the tire during curing as described here above.

US-A1 -2008/0084007 describes a bladder in accordance with the preamble of claim 1.

### DEFINITIONS

"Axial" and "Axially" means the lines or directions that are parallel to the axis of rotation of a tire or a bladder.
"Bead" or "Bead Core" generally means that part of a tire comprising an annular tensile member of radially inner beads that are associated with holding the tire to the rim.
"Circumferential" most often means circular lines or directions extending along the perimeter of the surface of the annular tread of a tire perpendicular to the axial direction; it can also refer to the direction of the sets of adjacent circular curves whose radii define the axial curvature of the tread, as viewed in cross section.
"Equatorial Plane" means the plane perpendicular to a tire's axis of rotation and passing through the center of its tread.
"Gauge" refers to cross-sectional thickness, measured along a line that is normal to at least one surface of what is being measured.
"Lateral" means a direction parallel to the axial direction.
"Radial" and "radially" mean directions radially toward or away from the axis of rotation of a tire.
"Shoulder" of a tire means the upper portion of the tire sidewall just below the tread edge.
"Tread Cap" refers to the tread and the underlying material into which the tread pattern is molded.
"Tread Contour" means the shape of a tire tread as viewed in axial cross section.
"Tread width" means the arc length of the tread surface in the plane includes the axis of rotation of the tire.

### SUMMARY OF THE INVENTION

The invention relates to a bladder according to claim 1 and to an apparatus according to claim 14.

Dependent claims refer to preferred embodiments of the invention.

In one aspect of the invention, the two structurally weakened circumferential strip-like regions are located such that they come into contact with the shoulder portions of the tire when the bladder is fully inflated in the cavity of the tire.

In another aspect of the invention, the rigidity of the membrane at the remaining regions does not vary more than by 10%.

In yet another aspect of the invention, the gauge of the membrane at the two structurally weakened circumferential strip-like regions is less than at the remaining regions.

In yet another aspect of the invention, the gauge of the membrane at the two structurally weakened circumferential strip-like regions is less by at least 30%, alternately by at least 40%, than at the remaining regions of the endless ribbon.

In yet another aspect of the invention, the gauge variation of the membrane when moving from the two structurally weakened circumferential strip-like regions towards a circumferential center region is continuous.

In yet another aspect of the invention, the gauge variation of the membrane when moving from the two structurally weakened circumferential strip-like regions towards the circumferential edges, respectively, is continuous.

In yet another aspect of the invention, at least one of the two structurally weakened circumferential strip-like regions comprises a first elastomeric material which is different from the elastomeric material used in the remaining regions and wherein the elasticity modulus of the first material is lower than the elasticity modulus of the elastomeric material used in the remaining regions.

In yet another aspect of the invention, the gauge of the membrane at the at least one of the two structurally weakened circumferential strip-like regions is less than at the remaining regions.

In yet another aspect of the invention, the elastomeric material used in the remaining regions is substantially homogenous.

In one aspect of the method according to the invention, during the inflation step the bladder initially contacts the inner surface of the tire at inner bead regions of the tire and inner sidewalls regions of the tire. The structurally weakened regions of the bladder are then stretched during further inflation in such a way that the bladder progressively come into contact with the inner shoulder regions of the tire and an inner central portion of the tire.

In another aspect of the method according to the invention, the structurally weakened regions of the bladder are shaped in such a way that their stretching during inflation reduces or minimizes the deformation by stretching of side sections of the bladder contacting the inner sidewalls regions of said tire.

In yet another aspect of the method according to the invention, during the inflation step the bladder contacts the inner surface of the tire progressively and symmetrically with regard to the equatorial plane EP of the tire.

In yet another aspect of the method according to the invention, a central region of the bladder located between the structurally weakened regions contacts the surface of the inner central region of the tire only when the shoulder regions of the bladder are already in contact with the inner shoulder regions of the tire.

### BRIEF DESCRIPTION OF THE DRAWINGS

The invention will be described by way of example and with reference to the accompanying figures in which:
FIG. 1 is a sectional view of an apparatus for forming and curing tires as known from the prior art.
FIG. 2a to FIG. 2f are cross sectional views at successive different steps of the inflation and expansion process of a bladder according to the prior art.
FIG. 3a to FIG. 3e are cross sectional views at successive different steps of the inflation and expansion process of a bladder according to the invention.

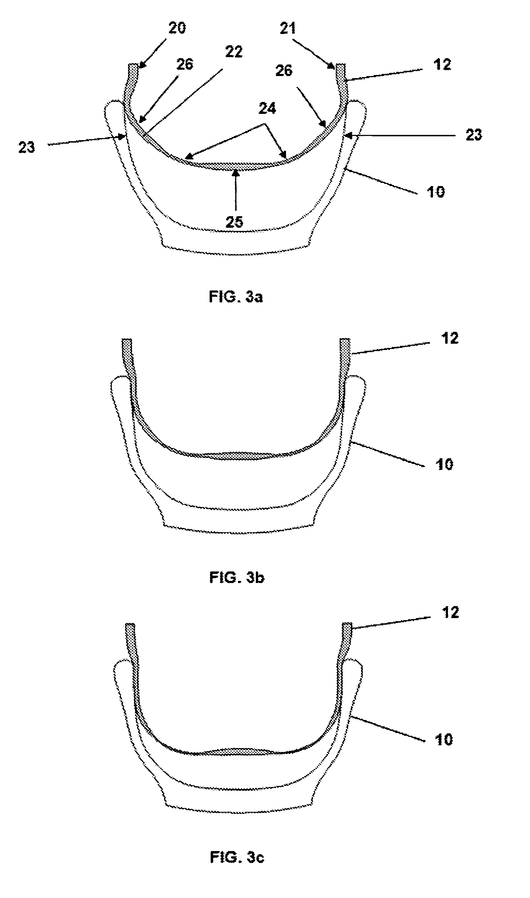

FIG. 3a shows the beginning of the inflation where the bladder comes into contact first with the lower sections of the inner sidewalls of a tire.

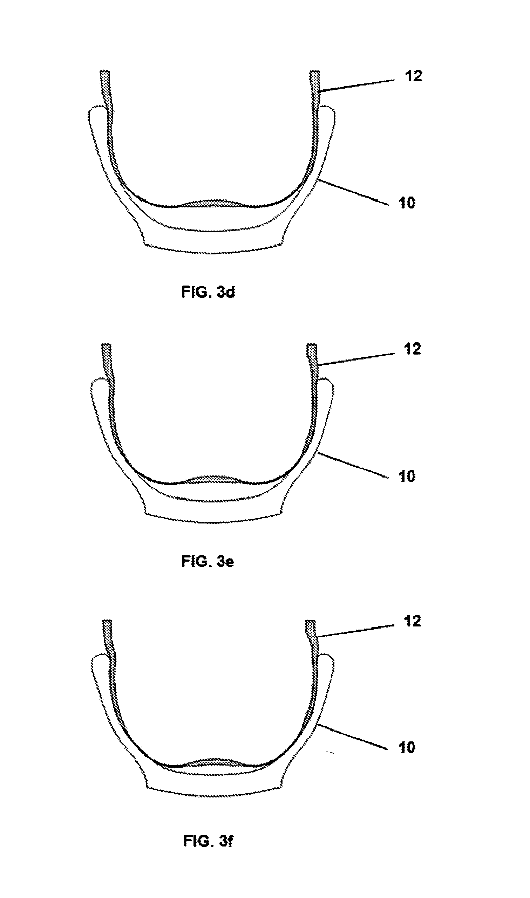

FIG. 3b, 3c, 3d and 3e show that the bladder comes progressively into contact with the inner sidewalls of the tire with a slight stretching of the corresponding portions of the bladder whereas the weakened regions are stretched to a greater extend.

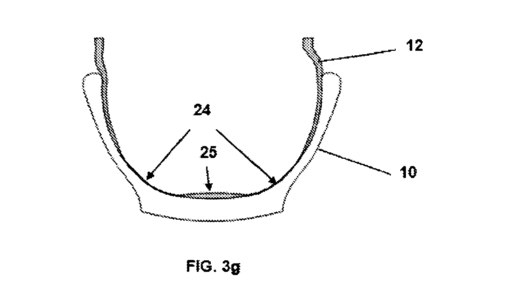

FIG. 3f and 3g show that the contacting process of the bladder with the tire finishes with the center portion of the tire.

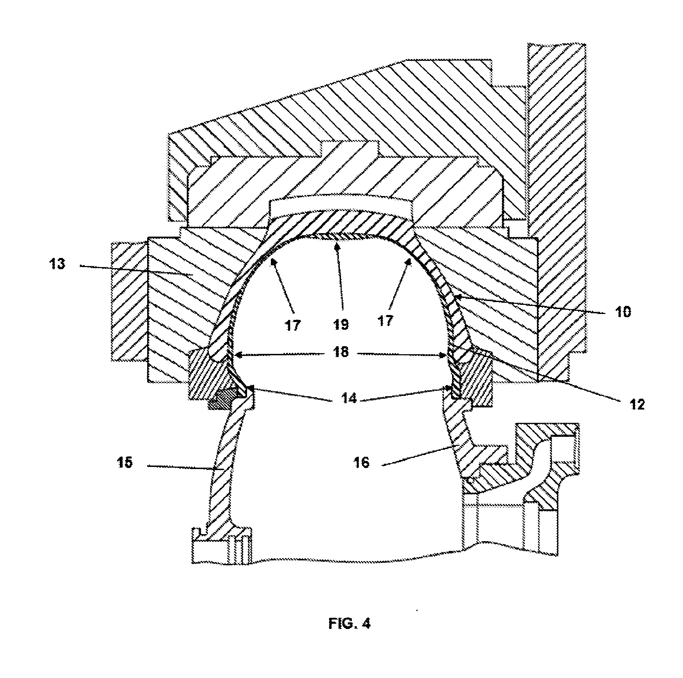

FIG. 4 is a sectional view of an apparatus for forming and curing tires according to the invention.

### DETAILED DESCRIPTION OF THE INVENTION

An embodiment of the invention is illustrated in Figures 3a to 3g. Figure 3a illustrates a bladder 12 in accordance with the invention in a partially inflated but not yet expanded state. The bladder 12 is composed of an endless ribbon or strip of elastomeric material forming an expandable elastomeric membrane 22. The ribbon comprises a main circumferential region 24, 25, 26 which comes into contact with the cavity of the tire upon inflation of the bladder and two circumferential edges 20, 21 which are adapted to be fastened to two axially opposite anchoring flanges of a tire mold. The gauge or thickness of the membrane 22 is not constant along the cross-sectional section of the bladder 12. The membrane 22 is thicker at the two circumferential edges 20, 21. This provides a higher stiffness and resistance at the anchoring regions. The thickness of the membrane initially diminishes progressively, i.e. continuously or gradually, from the edges 20, 21 to lateral regions 26 which are adapted for contacting the inner lower sidewalls 23 of the tire. The membrane 22 then has a constant or essentially constant thickness in these lateral regions 26 of the bladder which contact the lower sidewalls 23 when the bladder is expanded. The membrane gauge then further diminishes progressively, i.e. continuously or gradually, from the lateral regions 26 to the shoulder regions 24, i.e. the regions of the membrane 22 which come into contact with the inner surface of the tire at the shoulders regions of the tire when the bladder 12 is fully inflated. As shown in Figure 3g, these shoulder regions 24 come into contact with the inner surface of the tire at the shoulder regions preferably only when the bladder 12 is totally expanded in the tire cavity. The gauge of the membrane 22 at the center region 25 located between the two structurally weakened regions 24 is preferably about the same as the constant or essentially constant gauge of the lateral regions 26. In one embodiment, the gauge of the membrane in the weakened regions 24 is in the range of 30% to 70%, alternately 35% to 50%, of the constant or essentially constant gauge of the membrane in the lateral regions 26. The membrane gauge can also vary continuously or gradually within the weakened regions 24 along the cross section of the membrane. The membrane does not vary by more than 15% gauge, preferably less than 10%, in the remaining regions which come into contact with the inner surface of the tire. The positions of the weakened regions 24 are preferably symmetrical with regard to the equatorial plane EP of the tire.

Upon progressive inflation of the bladder 12, it can been seen in Figure 3b that the structurally weakened regions 24 are stretched more than the remaining regions of the membrane and that, as a consequence, the lateral regions 26 of the membrane come progressively and continuously into contact with the inner surface of the tire from the bead regions to the shoulder regions. This is illustrated in Figures 3b, 3c and 3d. It is noticeable that the membrane gauge at the lateral regions 26 does substantially not vary or, if any, very little so that the relative movement between the outer contacting surface of the bladder and the inner surface of the uncured tire is very limited.

Still upon further inflation of the bladder, the shoulder regions 24 of the membrane come progressively into contact with the inner surface of the tire following the lateral regions 26. This is illustrated in Figures 3e and 3f. The central region 25 of the bladder is now also under tension and slightly stretched, mainly at the connection areas with the structurally weakened regions 24. The central region 25 remains essentially parallel to the tread of the tire and approaches the corresponding inner surface portion of the tire progressively. As illustrated in Figures 3f and 3g the central region 25 of the membrane contacts the tire preferably only at the very end of the expansion process of the tire, i.e. after that the structurally weakened regions 24 have fully contacted the tire.

An apparatus for forming and curing tires involving a bladder as described in Figures 3a-3g is illustrated in Figure 4. A tire 10 is positioned into a mold 13 and a bladder 12 is inflated in the cavity of the tire to come into contact with the whole inner surface of the tire. The two circumferential edges 14 of the membrane of the bladder 12 are fastened to two anchoring flanges 15 and 16, respectively. The bead regions of the inner surfaces of the tire are represented by the numeral 18, the shoulder regions by the numeral 17 and the center region by the numeral 19. The presence of structurally weakened regions 24 (Figure 3g) at the shoulder regions of the membrane as recited here above permits a shaping of the bladder 12 during its inflation. This shaping allows a progressive contact of the bladder during inflation with the inner surface of the tire from the tire beads 18 to the inner center region 19 of the tire and reduces, if not avoids, any relative movement between the lateral regions 26 of the bladder 12 and the corresponding sidewalls of the tire. The stretching ability of the structurally weakened regions 24 of the membrane 22 reduces the stress in the lateral regions 26 of the membrane at the end of the expansion progress, i.e. when the membrane comes into contact with the shoulder and central regions of the tire. This is particularly true for tires which have normal or high aspect ratios.

The thickness variation of the bladder along its profile can be designed differently as illustrated here above. For example, the variations can be more progressive or more abrupt as illustrated. The exact bladder profile will depend on the characteristics of its material and also of the tire to be shaped and cured.

In addition, the gauge of the membrane can also be designed for influencing the temperature distribution along the tire profile during curing as a thinner gauge of the membrane results in a faster heating up of the corresponding tire portion being in contact with that part of the membrane. As can be seen in Figures 3a-3g, more particularly in Figure 3g, the central region 25 of the membrane is less stretched than the rest of the membrane when fully inflated in the tire, so that the membrane gauge at this section can be set higher than at the lateral regions 26 in order to slow down the heating up of the center region of the tire.

The tire bladders of the present invention are formed by conventional expandable and durable materials, preferably rubber. The bladders may be reinforced with plies of parallel cord materials or woven fabrics. These features of a tire bladder are well known and conventional in the art of bladder forming.

In an alternative mode for carrying out the invention, the bladder 12 could be weakened at the shoulder portions 24 by using a different elastomeric material compared to the elastomeric material used in the other parts 25, 25 of the membrane. In this embodiment, the rubber compound composition is changed in the two shoulder regions in such a way that it confers to these regions a lower elasticity modulus and a capacity to be more stretched under a given tension compared to the remaining regions, in particular compared to the lateral regions 26.

In a further alternative mode, a combination of a variation of the elastomeric material and of the thickness of the membrane is used for providing structurally weakened shoulder regions.

## Claims

1. A bladder for shaping and curing a green tire comprising an endless ribbon of elastomeric membrane (22), the ribbon comprising a main circumferential portion (24, 25, 26) which comes into contact with the cavity of the tire upon full inflation of the bladder (12) and two circumferential edges (21) which are adapted to be fastened to two axially opposite flanges of a tire mold, respectively; wherein the membrane (22) in the main circumferential portion (24, 25, 26) of the ribbon is structurally weakened in two circumferential regions (24) which are adapted for contacting the shoulder regions of the tire, and wherein the rigidity of the membrane (22) in the remaining regions (25, 26) of the main circumferential portion is higher than in the two structurally weakened circumferential regions (24) so that the two structurally weakened circumferential regions (24) are able, upon inflation of the bladder (12), to stretch substantially more than the remaining regions (25, 26), **characterized in that** the rigidity of the membrane (22) in the remaining regions (25, 26) does not vary more than by 15%.

2. The bladder according to claim 1, wherein the rigidity of the membrane (22) in the remaining regions (25, 26) varies less than 10%.

3. The bladder according to claim 1, wherein the main circumferential portion comprises two circumferential lateral regions (26) which are adapted for contacting the inner lower sidewalls (23) of the tire (10), two structurally weakened, circumferential regions (24) which are adapted for contacting the shoulder regions of the tire, and a center region (25) between the two structurally weakened, circumferential regions (24).

4. The bladder of claim 3 wherein the membrane has a constant thickness or an essentially constant thickness in the lateral regions (26).

5. The bladder according to at least one of the previous claims, wherein the gauge of the membrane (22) in the two structurally weakened circumferential regions (24) is less than at the remaining regions.

6. The bladder according to claim 5, wherein the gauge of the membrane (22) in the two structurally weakened circumferential regions (24) is at least 30% less than in the remaining regions.

7. The bladder according to at least one of the previous claims, wherein the gauge variation of the membrane (22) when moving from the two structurally weakened circumferential regions (24) towards a circumferential center region (25) is continuous and/or wherein the gauge variation of the membrane (22) when moving from the two structurally weakened circumferential regions (24) towards the circumferential edges (21), respectively, is continuous.

8. The bladder according to at least one of the previous claims, wherein at least one of the two structurally weakened circumferential regions (24) comprises a first elastomeric material which is different from the elastomeric material used in the remaining regions (25, 26), and wherein the elasticity modulus of the first material is lower than the elasticity modulus of the elastomeric material used in the remaining regions.

9. The bladder according to claim 1 or 8, wherein the gauge of the membrane (22) at the at least one of the two structurally weakened circumferential regions (24) is less than at the remaining regions (25, 26).

10. The bladder according to claim 1, 8 or 9, wherein the elastomeric material used in the remaining regions (25, 26) is substantially homogenous.

11. The bladder according to at least one of the previous claims, wherein the two structurally weakened circumferential regions (24) are strip-like regions.

12. The bladder according to claim 4, wherein the gauge of the membrane (22) in the structurally weakened regions (24) is in the range of from 30% to 70% of the constant or essentially constant gauge of the membrane in the lateral regions (26).

13. The bladder according to claim 4, wherein the gauge of the membrane (22) in the structurally weakened regions (24) is in the range of from 35% to 50% of the constant or essentially constant gauge of the membrane in the lateral regions (26).

14. An apparatus for shaping and curing a green tire, the apparatus comprising a tire mold (2) comprising at least two axially opposite circumferential anchoring flanges (15, 16) and a tire bladder (12) according to one of the previous claims.

## Patentansprüche

1. Heizbalg zum Formen und Vulkanisieren eines Reifenrohlings, umfassend ein Endlosband aus Elastomermembran (22), wobei das Band einen Haupt-Umfangsteil (24, 25, 26), der bei voller Befüllung des Heizbalgs (12) mit dem Hohlraum des Reifens in Kontakt kommt, und zwei umfangsgerichtete Ränder (21), die jeweils zur Befestigung an zwei axial gegenüberliegenden Flanschen eines Reifenformwerkzeugs eingerichtet sind, umfasst; wobei die Membran (22) in dem Haupt-Umfangsteil (24, 25, 26) des Bandes in zwei Umfangsbereichen (24) strukturell geschwächt ist, welche Bereiche zum Inkontaktkommen mit den Schulterbereichen des Reifens eingerichtet sind, und wobei die Steifigkeit der Membran (22) in den übrigen Bereichen (25, 26) des Haupt-Umfangsteils höher als in den zwei strukturell geschwächten Umfangsbereichen (24) ist, sodass die zwei strukturell geschwächten Umfangsbereiche (24) fähig sind, sich bei Befüllen des Heizbalgs (12) im Wesentlichen mehr zu dehnen als die übrigen Bereiche (25, 26), **dadurch gekennzeichnet, dass** die Steifigkeit der Membran (22) in den übrigen Bereichen (25, 26) nicht um mehr als 15% variiert.

2. Heizbalg nach Anspruch 1, wobei die Steifigkeit der Membran (22) in den übrigen Bereichen (25, 26) um weniger als 10% variiert.

3. Heizbalg nach Anspruch 1, wobei der Haupt-Umfangsteil zwei seitliche Umfangsbereiche (26), die zum Inkontaktkommen mit den inneren unteren Seitenwänden (23) des Reifens (10) eingerichtet sind, zwei strukturell geschwächte Umfangsbereiche (24), die zum Inkontaktkommen mit den Schulterbereichen des Reifens eingerichtet sind, und einen zentralen Bereich (25) zwischen den zwei strukturell geschwächten Umfangsbereichen (24) umfasst.

4. Heizbalg nach Anspruch 3, wobei die Membran eine konstante Dicke oder eine im Wesentlichen konstante Dicke in den seitlichen Bereichen (26) aufweist.

5. Heizbalg nach mindestens einem der vorgenannten Ansprüche, wobei die Dicke der Membran (22) in den zwei strukturell geschwächten Umfangsbereichen (24) weniger als an den übrigen Bereichen beträgt.

6. Heizbalg nach Anspruch 5, wobei die Dicke der Membran (22) in den zwei strukturell geschwächten Umfangsbereichen (24) mindestens 30% weniger als in den übrigen Bereichen beträgt.

7. Heizbalg nach mindestens einem der vorgenannten Ansprüche, wobei die Dickenvariation der Membran (22) beim Übergang von den zwei strukturell geschwächten Umfangsbereichen (24) zu einem zentralen Umfangsbereich (25) kontinuierlich ist und/oder wobei die Dickenvariation der Membran (22) beim Übergang von den zwei strukturell geschwächten Umfangsbereichen (24) jeweils zu den Umfangsrändern (21) kontinuierlich ist.

8. Heizbalg nach mindestens einem der vorgenannten Ansprüche, wobei mindestens einer der zwei strukturell geschwächten Umfangsbereiche (24) ein erstes Elastomermaterial umfasst, das von dem in den übrigen Bereichen (25, 26) verwendeten Elastomermaterial verschieden ist, und wobei der Elastizitätsmodul des ersten Materials niedriger als der Elastizitätsmodul des in den übrigen Bereichen verwendeten Elastomermaterials ist.

9. Heizbalg nach Anspruch 1 oder 8, wobei die Dicke der Membran (22) an dem mindestens einen der zwei strukturell geschwächten Umfangsbereiche (24) weniger beträgt als an den übrigen Bereichen (25, 26).

10. Heizbalg nach Anspruch 1, 8 oder 9, wobei das in den übrigen Bereichen (25, 26) verwendete Elastomermaterial im Wesentlichen homogen ist.

11. Heizbalg nach mindestens einem der vorgenannten Ansprüche, wobei die zwei strukturell geschwächten Umfangsbereiche (24) streifenartige Bereiche sind.

12. Heizbalg nach Anspruch 4, wobei die Dicke der Membran (22) in den strukturell geschwächten Bereichen (24) im Bereich von 30% bis 70% der konstanten oder im Wesentlichen konstanten Dicke der Membran in den seitlichen Bereichen (26) liegt.

13. Heizbalg nach Anspruch 4, wobei die Dicke der Membran (22) in den strukturell geschwächten Bereichen (24) im Bereich von 35% bis 50% der konstanten oder im Wesentlichen konstanten Dicke der Membran in den seitlichen Bereichen (26) liegt.

14. Vorrichtung zum Formen und Vulkanisieren eines Reifenrohlings, wobei die Vorrichtung ein Reifenformwerkzeug (2) umfasst, das mindestens zwei axial gegenüberliegende umfangsgerichtete Verankerungsflansche (15, 16) und einen Reifenheizbalg (12) nach einem der vorgenannten Ansprüche umfasst.

## Revendications

1. Vessie pour la confection et la vulcanisation d'un bandage pneumatique cru comprenant un ruban sans fin d'une membrane élastomère (22), le ruban comprenant une portion principale circonférentielle (24, 25, 26) qui entre en contact avec la cavité du bandage pneumatique lors du gonflage complet de la vessie (12) et deux bords circonférentiels (21) qui sont conçus pour venir se fixer à deux brides d'un moule pour bandage pneumatique, opposées en direction axiale, dans laquelle la membrane (22) dans la portion principale circonférentielle (24, 25, 26) du ruban présente un affaiblissement quant à sa structure dans deux zones circonférentielles (24) qui sont conçues pour entrer en contact avec les zones d'épaulement du bandage pneumatique, et dans laquelle la rigidité de la membrane (22) dans les zones restantes (25, 26) de la portion principale circonférentielle est supérieure à celle des deux zones circonférentielles (24) présentant un affaiblissement structurel, si bien que les deux zones circonférentielles (24) présentant un affaiblissement structurel sont capables, après le gonflage de la vessie (12), de s'étendre essentiellement plus loin que les zones restantes (25, 26), **caractérisée en ce que** la rigidité de la membrane (22) dans les zones restantes (25, 26) ne varie pas à concurrence de plus de 15 %.

2. Vessie selon la revendication 1, dans laquelle la rigidité de la membrane (22) dans les zones restantes (25, 26) varie à concurrence de moins de 10 %.

3. Vessie selon la revendication 1, dans laquelle la portion principale circonférentielle comprend deux zones latérales circonférentielles (26) qui sont conçues pour entrer en contact avec les flancs inférieurs internes (23) du bandage pneumatique (10).

4. Vessie selon la revendication 3, dans laquelle la membrane possède une épaisseur constante ou une épaisseur essentiellement constante dans les zones latérales (26).

5. Vessie selon au moins une des revendications précédentes, dans laquelle l'épaisseur de la membrane (22) dans les deux zones circonférentielles (24) présentant un affaiblissement structurel est inférieure à celle des zones restantes.

6. Vessie selon la revendication 5, dans laquelle l'épaisseur de la membrane (22) dans les deux zones circonférentielles (24) présentant un affaiblissement structurel est inférieure à concurrence d'au moins 30 % à celle des zones restantes.

7. Vessie selon au moins une des revendications précédentes, dans laquelle la variation d'épaisseur de la membrane (22), en allant des deux zones circonférentielles (24) présentant un affaiblissement structurel vers la zone centrale circonférentielle (25), est continue et/ou dans laquelle la variation d'épaisseur de la membrane (22), en allant des deux zones circonférentielles (24) présentant un affaiblissement structurel vers les bords circonférentiels (21), respectivement, est continue.

8. Vessie selon au moins une des revendications précédentes, dans laquelle au moins une des deux zones circonférentielles (24) présentant un affaiblissement structurel comprend une première matière élastomère qui est différente de la matière élastomère utilisée dans les zones restantes (25, 26), et dans laquelle le module d'élasticité de la première matière est inférieur au module d'élasticité de la matière élastomère utilisée dans les zones restantes.

9. Vessie selon la revendication 1 ou 8, dans laquelle l'épaisseur de la membrane (22) dans au moins une des deux zones circonférentielles (24) présentant un affaiblissement structurel est inférieure à celle des zones restantes (25, 26).

10. Vessie selon la revendication 1, 8 ou 9, dans laquelle la matière élastomère utilisée dans les zones restantes (25, 26) est essentiellement homogène.

11. Vessie selon au moins une des revendications précédentes, dans laquelle les deux zones circonférentielles (24) présentant un affaiblissement structurel sont des zones en forme de bande.

12. Vessie selon la revendication 4, dans laquelle l'épaisseur de la membrane (22) dans les zones circonférentielles (24) présentant un affaiblissement structurel représente une valeur dans la plage de 30 % à 70 % de l'épaisseur constante ou essentiellement constante de la membrane dans les zones latérales (26).

13. Vessie selon la revendication 4, dans laquelle l'épaisseur de la membrane (22) dans les zones circonférentielles (24) présentant un affaiblissement structurel représente une valeur dans la plage de 35 % à 50 % de l'épaisseur constante ou essentiellement constante de la membrane dans les zones latérales (26).

14. Appareil pour la confection et la vulcanisation d'un bandage pneumatique cru, l'appareil comprenant un moule pour bandage pneumatique (2) comprenant au moins deux brides d'ancrage circonférentielles (15, 16) opposées en direction axiale et une vessie pour bandage pneumatique (12) selon l'une quelconque des revendications précédentes.
